# EUROPEAN PATENT APPLICATION

(11) **EP 4 641 473 A1**
(43) Date of publication of application: **29.10.2025**
(21) Application number: 24174023.2
(22) Date of filing: 03.05.2024
(51) Int. Cl.: G06Q 40/02

(54) **A SYSTEM AND METHODOLOGY FOR INCENTIVIZING SPONSORSHIPS AND PARTNERSHIPS THROUGH LIQUID ASSET OPTIMIZATION**

(30) Priority: 28.04.2024 US 202418648406
(71) Applicant: Alwallan, Saleh, 13322 Riyadh (SA)
(72) Inventor: Alwallan, Saleh, 13322 Riyadh (SA)
(74) Representative: Sirius IP

(57) **Abstract**

The present invention introduces a comprehensive system aimed at revitalizing commercial sponsorships, empowering organizations, entities, and individuals to achieve their strategic marketing goals. This approach seamlessly integrates data analytics, market research, strategic planning, and indicators of liquid asset governance to identify, evaluate, and capitalize on sponsorship opportunities across various platforms and channels. By creatively connecting sponsorships with multiple indicators that contribute to marketing operational sustainability, this method enhances their effectiveness and efficiency. Additionally, it facilitates precise assessment and governance of opportunities, automatically determining fair value propositions to withstand economic fluctuations. Ultimately, it enables brands to maximize the impact of their sponsorship investments. This summary encapsulates the fundamental essence of the system and its overarching strategy for optimizing sponsorship engagements, providing a valuable framework for brands aiming to enhance their marketing strategies through this methodology.

## Description

### TECHNICAL FIELD

The present invention relates to the field of Financial management, and more particularly to marketing and sponsorship optimization.

### BACKGROUND

The following description includes information that may be useful in understanding the present invention. It is not an admission that any of the information provided herein is prior art or relevant to the presently claimed invention, or that any publication specifically or implicitly referenced is prior art.

In today's dynamic financial landscape, the quest for innovative strategies to optimize asset utilization is ever-present. Liquid assets, particularly those held within banking institutions, represent a significant reservoir of value that is ripe for exploration. However, traditional banking practices often limit the scope of these assets to generating interest income through conventional avenues such as savings or call accounts.

Despite their potential, liquid assets within banking institutions face several challenges that hinder their full utilization. One key challenge is the lack of avenues for generating additional revenue beyond traditional interest-bearing accounts. This restricts the ability of both financial institutions and account holders to fully capitalize on these assets.

Moreover, the prevailing economic environment, characterized by fluctuating interest rates and evolving market conditions, further complicates the optimization of liquid assets. Traditional approaches to asset management may struggle to adapt to these dynamic conditions, leading to suboptimal outcomes for banks and account holders alike.

Additionally, the regulatory landscape surrounding banking and financial transactions introduces complexities that can impede the exploration of alternative uses for liquid assets. Compliance requirements and regulatory constraints may limit the flexibility of financial institutions to innovate in this space, constraining their ability to explore new revenue-generating opportunities.

Addressing these challenges requires a fresh perspective and innovative solutions that can unlock the latent value of liquid assets within banking institutions. By reimagining the role of these assets and exploring novel avenues for their utilization, financial institutions can not only enhance their revenue streams but also foster mutually beneficial partnerships and collaborations with their account holders.

In light of these challenges and drawbacks, there exists a compelling opportunity for innovative solutions that address the limitations. As a result, there exists a need for improvements over the prior art and more particularly for a more efficient way.

### SUMMARY OF THE INVENTION

This invention introduces a comprehensive system aimed at revitalizing commercial sponsorships, enabling organizations, entities, and individuals to achieve their strategic marketing goals effectively. It integrates various components such as data analytics, market research, strategic planning, and indicators of liquid asset governance to identify, evaluate, and leverage sponsorship opportunities across different platforms and channels seamlessly.

By creatively linking sponsorships with multiple indicators that contribute to marketing operational sustainability, this approach enhances their effectiveness and efficiency. It ensures that sponsorships are aligned with broader marketing objectives and are strategically positioned to yield maximum impact.

Furthermore, the system facilitates accurate evaluation and governance of sponsorship opportunities, utilizing sophisticated algorithms to automatically determine equitable value propositions that can withstand economic fluctuations. This ensures that brands can make informed decisions regarding their sponsorship investments, mitigating risks and optimizing returns.

Ultimately, the invention empowers brands to optimize the impact of their sponsorship investments, providing them with a valuable framework for elevating their marketing strategies. By encapsulating the core essence of the system and its overarching approach to sponsorship engagements, this abstract offers a comprehensive guide for brands seeking to enhance their marketing efforts through this methodology.

The summary of the invention does not necessarily disclose all the features essential for defining the invention. The invention may reside in a sub-combination of the disclosed features. The various combinations and sub-combination are fully described in the detailed description.

### BRIEF DESCRIPTION OF DRAWINGS

The accompanying drawings are included to provide a further understanding of the present disclosure and are incorporated in and constitute a part of this specification. The drawings illustrate exemplary embodiments of the present disclosure and, together with the description, serve to explain the principles of the present disclosure.

The diagrams are for illustration only, which thus is not a limitation of the present disclosure, and wherein:
FIG. 1 illustrates a comprehensive overview of the governance, operations, and management of various bank accounts and their associated treasury functions, in accordance with a preferred embodiment of the invention.
FIG. 2 is a block diagram that illustrates the interconnectedness among various entities of banking ecosystem, in accordance with a preferred embodiment of the invention.
FIG. 3 is a flowchart that provide detailed explanations of various components and processes outlined, in accordance with a preferred embodiment of the invention.

### DETAILED DESCRIPTION OF DRAWINGS

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure.

The system and methodology outlined here introduce a paradigm shift in how liquid assets, particularly cash holdings within bank accounts, can be strategically utilized to optimize sponsorship engagements. Traditionally, these assets are primarily utilized within banking institutions to generate interest income for both account holders and the financial institutions themselves. However, the potential for leveraging these assets beyond typical deposit accounts, such as savings or call accounts, has often been overlooked. This innovation proposes a novel approach that transcends conventional banking practices, offering a comprehensive framework for harnessing the untapped potential of liquid assets in sponsorship optimization. By strategically allocating these assets towards sponsorship engagements, organizations can unlock a new avenue for generating value and enhancing their marketing efforts.

At the core of this methodology is the recognition that liquid assets represent not only a financial resource but also a strategic asset that can be leveraged to achieve marketing objectives. By redirecting a portion of these assets towards sponsorship opportunities, organizations can strategically align their financial resources with their marketing goals, thereby maximizing the impact of their sponsorship investments. Moreover, by integrating data analytics, market research, and strategic planning into the decision-making process, this approach enables organizations to identify and assess sponsorship opportunities with precision and accuracy. By leveraging data-driven insights, organizations can make informed decisions about which sponsorship opportunities are most likely to align with their strategic objectives and deliver the greatest return on investment. Furthermore, this methodology emphasizes the importance of governance and evaluation in the sponsorship optimization process. By implementing robust governance mechanisms and continuously evaluating sponsorship opportunities, organizations can ensure that their sponsorship investments remain aligned with their strategic objectives and adapt to changing market conditions.

This inventive methodology addresses the limitation of traditional banking practices by offering an alternative mechanism for leveraging liquid assets to generate income and foster commercial sponsorship engagements. Rather than solely relying on interest payments, banks and financial institutions can utilize the funds held in current accounts to create additional income streams. Concurrently, this approach involves engaging account owners in sponsorship opportunities, thereby creating a mutually beneficial relationship between the financial institution and its clients. This inventive methodology involves a multifaceted approach to leveraging liquid assets held within current accounts to generate income and facilitate sponsorship engagements. Some of the details are mentioned below:

Identification of Liquid Assets: The methodology begins by identifying the pool of liquid assets held within current accounts across the banking institution.

Analysis of Sponsorship Opportunities: A thorough analysis is conducted to identify potential sponsorship opportunities that align with the institution's strategic objectives and the interests of its account holders.

Creation of Income Streams: Instead of allowing these liquid assets to remain idle, the methodology proposes strategies for utilizing them to generate income. This may involve investing a portion of the funds in income-generating channels or deploying them in other revenue-generating activities.

Engagement with Account Holders: Account holders are engaged in sponsorship opportunities that are funded by the income generated from their liquid assets. This engagement could take various forms, such as offering exclusive sponsorship packages or incentives to account holders who participate in sponsorship activities.

Mutually Beneficial Arrangements: By participating in sponsorship engagements facilitated by the institution, account holders not only contribute to revenue generation but also benefit from being associated with the sponsored events or initiatives. This creates a mutually beneficial relationship between the financial institution and its clients.

Continuous Evaluation and Optimization: The methodology involves continuous evaluation and optimization of sponsorship engagements and income-generating activities to ensure they remain aligned with the institution's objectives and account holders' interests. This may include adjusting investment strategies, refining sponsorship offerings, and monitoring the performance of income-generating assets.

At the heart of this methodology is a sophisticated calculation process designed to determine the potential income generated from liquid assets. This calculation relies on a formula that takes into account several key factors to provide a comprehensive assessment. Firstly, the formula considers the cash balance held within the accounts, providing a baseline for potential income generation. The larger the cash balance, the greater the potential for income. Secondly, the duration of time that the funds remain deposited is factored into the equation. Longer durations typically yield higher returns, as the funds have more time to generate income. Additionally, prevailing interest rates play a crucial role in the calculation. Higher interest rates generally result in greater income generation, while lower rates may lead to reduced returns. Furthermore, the methodology takes into consideration any additional sources of complementary income that may augment the overall income generated from the liquid assets. This could include dividends from investments or other revenue streams associated with the assets. Finally, the calculation also accounts for any associated fees or charges, ensuring that the assessment of potential income generation is comprehensive and accurate. By incorporating these elements into the formula, the methodology provides a robust framework for evaluating the potential income derived from liquid assets. This allows financial institutions to make informed decisions about how to best utilize these assets to maximize income generation and optimize sponsorship engagements.

By embracing this methodology, banks and financial institutions open up innovative pathways for revenue generation while concurrently enhancing the value proposition for account holders. This approach presents account owners with the opportunity to engage in commercial sponsorships and earn a portion of the income generated from their liquid assets. This fosters a symbiotic relationship between financial institutions and their customers, where both parties reap mutual benefits. For banks and financial institutions, the adoption of this methodology offers a means to diversify revenue streams beyond traditional banking practices. By leveraging liquid assets for sponsorship engagements, they can generate additional income while also strengthening customer loyalty and engagement. On the other hand, account holders gain access to a unique opportunity to actively participate in sponsorship activities and share in the financial rewards. This not only provides them with a tangible benefit for maintaining their accounts but also enhances their overall banking experience by offering novel avenues for involvement and potential financial gain. Ultimately, this approach transforms the traditional banking relationship into a collaborative partnership where both parties contribute to and benefit from each other's success. It fosters a sense of empowerment and shared prosperity, driving greater satisfaction and loyalty among account holders while bolstering the financial health and growth of banking institutions.

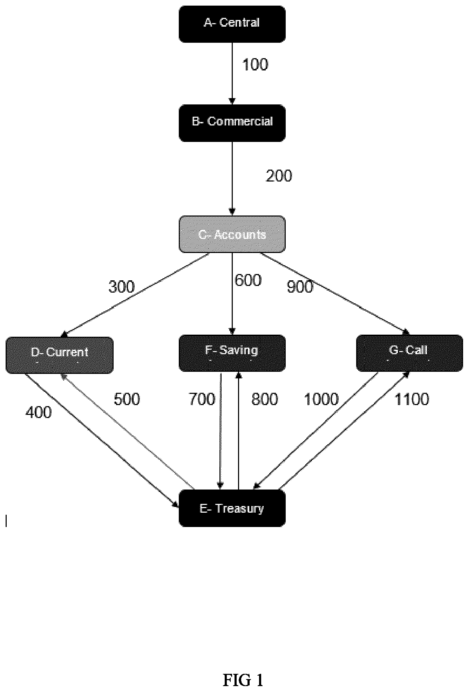

FIG. 1 illustrates a comprehensive overview of the governance, operations, and management of various bank accounts and their associated treasury functions, in accordance with a preferred embodiment of the invention. A detailed explanation of the provided code and item descriptions is mentioned below:
Code 'A' - Central banks: Central banks are responsible for overseeing and regulating the banking sector, including setting monetary policies, controlling interest rates, and establishing reserve requirements.
Code '100' - Governance of commercial banks: This code pertains to the regulatory framework through which central banks issue licenses to establish and operate commercial banks.
Code 'B' - Commercial banks: Commercial banks are financial institutions that act as custodians of funds and facilitate economic activities by providing various banking services, such as accepting deposits and granting loans.
Code '200' - Governance of bank accounts: This code addresses the regulatory guidelines and policies governing the operation and management of bank accounts.
Code 'C' - Accounts: This item refers to the different types of accounts offered by banks, including current, savings, and call accounts, each with specific features and regulations.
Code '300' - Governance of current accounts: This code pertains to the rules and regulations governing the operation and management of current accounts, which are primarily used for daily financial transactions.
Code 'D' - Current accounts: Current accounts are bank accounts designed for frequent transactions, offering easy access to funds through methods like checks, debit cards, and online transfers. They typically do not accrue interest and may require a minimum balance.
Code '400' - Deposits in the treasury: This item describes the consistent depositing of current account funds into the bank's treasury, serving as a primary source of funds for banking operations and meeting reserve requirements.
Code '500' - Commercial partnerships and sponsorships: This code introduces a novel methodology to generate fixed income from current accounts through commercial partnerships or sponsorships, providing income certainty based on interest rates, account balances, and duration.
Code 'E' - Treasury: The treasury manages various financial activities of the bank, including handling deposits and loans, investing in securities, and managing liquidity and risk.
Code '600' - Governance of savings accounts: This code addresses the rules and regulations governing the operation and management of savings accounts, which are designed for individuals to save money and earn interest over time.
Code 'F' - Savings accounts: Savings accounts allow individuals to deposit money and earn interest over time. They typically offer higher interest rates than current accounts and may have restrictions on withdrawals.
Code '700' - Deposits in the treasury: Savings account deposits are governed by specific rules and conditions set by banks or financial institutions, ensuring proper management and providing individuals with a secure avenue for saving money and earning interest.
Code '800' - Treasury investment return: Returns on savings accounts are disbursed in the form of interest payments, credited to the account based on the average daily balance and prevailing interest rates.
Code '900' - Governance of call accounts: This code pertains to the rules and regulations governing call accounts, which offer higher interest rates and flexibility compared to current accounts.
Code 'G' - Call accounts: Call accounts provide higher interest rates than current accounts and offer flexibility in accessing funds without penalties. They are suitable for individuals or businesses seeking higher interest rates while maintaining liquidity.
Code '1000' - Call accounts and treasury: Call accounts play a significant role in banks, offering higher interest rates while providing liquidity and stability to funding sources. Deposits are typically held in the bank's treasury for daily operations and investments.
Code'1100' - Treasury investment return: Returns on call accounts are disbursed as interest payments, credited based on the account's average daily balance and prevailing interest rates, ensuring continuous growth while maintaining liquidity.

The workflow begins with the establishment of commercial banks, facilitated by central banks issuing licenses to operate (Code ' 100'). These banks offer a range of account options to customers, including current, savings, and call accounts, each governed by specific rules and regulations (Code 'C'). Customers open accounts based on their financial needs and preferences, with current accounts primarily used for daily transactions, while savings accounts are for saving money and earning interest over time. Call accounts offer higher interest rates and flexibility in accessing funds (Entity 'B', 'C', 'D', 'F', 'G'). Funds from these accounts, particularly current accounts, are deposited into the bank's treasury, ensuring liquidity for banking operations (Code '400'). Savings and call account deposits are also managed within the treasury, adhering to specific rules and conditions (Codes '700', '1000'). The bank treasury manages various financial activities, including handling deposits and loans, investing in securities, and managing liquidity and risk (Entity 'E'). To generate income, the invention introduces a novel methodology (Code '500') to leverage funds from current accounts for commercial partnerships or sponsorships. Parties agree on parameters using a fixed formula based on interest rates, account balances, and duration. This allows account holders to participate in sponsorships and receive a share of the income generated from their liquid assets, fostering enhanced customer engagement and loyalty (Entity 'D', 'E', '500'). Treasury investment returns are disbursed as interest payments to account holders based on the account's balance and prevailing interest rates (Codes '800', '1100'). Throughout this process, banks and financial institutions adhere to regulatory guidelines set by central banks to ensure financial stability, security, and compliance with regulations (Codes '300', '600', '900'). This comprehensive workflow ensures the smooth operation of banking activities, income generation, customer engagement, and regulatory compliance throughout the process.

In an aspect of invention, system is designed to optimize sponsorship engagements by incorporating several key modules:
Data Analysis Module: This module analyzes current assets data to identify potential sponsorship or business partnership opportunities. By examining financial information such as account balances and transaction history, it helps pinpoint suitable opportunities for engagement. In addition to analyzing current assets data, the data analysis module integrates a predictive analytics component. This component is designed to anticipate future trends in sponsorship opportunities by analyzing historical data. By leveraging predictive analytics, the system can forecast upcoming opportunities, providing stakeholders with valuable insights for strategic decision-making and proactive engagement in sponsorship initiatives.

Benefit Modeling Module: The benefit modeling module creates a structured benefit model aimed at providing tangible or intangible benefits to current account owners participating in sponsorship or commercial partnership engagements. These benefits serve as incentives for account holders to engage in sponsorship opportunities. Within the benefit modeling module, a customization feature is incorporated to enhance flexibility and personalization for current account owners. This feature enables account holders to tailor benefits according to their individual preferences and interests. By offering customizable options, the system empowers current account owners to select benefits that align with their specific needs and preferences, thereby enhancing their overall satisfaction and engagement in sponsorship programs.

Promotion Module: This module promotes sponsorship opportunities and the associated benefits derived from utilizing liquid assets. It utilizes marketing strategies to raise awareness and generate interest among current account owners, encouraging their participation in sponsorship programs. To amplify the reach and effectiveness of sponsorship promotions, the promotion module integrates an automated marketing platform. This platform seamlessly integrates with social media channels, enabling the system to reach a broader audience of current account owners. By leveraging social media channels, the system can disseminate promotional content efficiently and engage with current account owners on platforms they frequent. This approach enhances visibility and engagement in sponsorship opportunities, maximizing participation and impact.

Preference Table Design Module: The preference table design module creates preference tables used for negotiating compensation ratios. These tables consider factors such as interest rates, account balances, and expected returns, providing a framework for fair and transparent negotiations between parties involved in sponsorship agreements. The preference table design module incorporates a dynamic adjustment mechanism to ensure adaptability and responsiveness in compensation ratios. This mechanism is capable of updating compensation ratios in real-time based on market fluctuations and regulatory changes. By dynamically adjusting compensation ratios, the system can maintain fairness and competitiveness in sponsorship agreements amidst evolving market conditions. This feature enhances the system's agility and ability to optimize sponsorship engagements in dynamic environments.

Interest Rate Utilization Module: This module utilizes interest rates and their derivatives to determine the size and scope of sponsorships and commercial partnerships. It evaluates the financial implications of different interest rate scenarios, helping stakeholders make informed decisions about sponsorship investments. Within the interest rate utilization module, an additional feature includes a scenario analysis tool. This tool empowers stakeholders to simulate various interest rate scenarios and evaluate their impact on sponsorship outcomes. By conducting scenario analyses, stakeholders can assess potential risks and opportunities associated with different interest rate environments, enabling informed decision-making and proactive management of sponsorship engagements.

Benefit Size Determination Module: The benefit size determination module calculates the size of benefits associated with sponsorship or business partnerships. It takes into account interest rates, deposits, and time variables to quantify the potential returns for current account owners participating in sponsorship programs. As part of the benefit size determination module, a sensitivity analysis function is incorporated to enhance risk assessment capabilities. This function evaluates the sensitivity of benefit sizes to changes in interest rates, deposits, and time variables. By conducting sensitivity analyses, stakeholders can identify potential vulnerabilities and assess the robustness of sponsorship initiatives under different conditions, facilitating risk mitigation strategies and optimization of sponsorship engagements.

Contracting Module: This module facilitates the formalization of agreements for leveraging current deposits in sponsorship engagements. It ensures that the terms and conditions of sponsorship agreements are clearly defined, providing legal clarity and protection for all parties involved. In addition to facilitating contract formalization, the contracting module includes a compliance verification feature. This feature ensures adherence to legal and regulatory requirements in sponsorship agreements. By verifying compliance with relevant laws and regulations, the system minimizes legal risks and ensures the integrity and validity of sponsorship engagements, fostering trust and confidence among stakeholders.

Current Account Data Utilization Module: This module utilizes financial information from current accounts for activities related to sponsorship or business partnerships. It leverages data analytics to inform decision-making and strategy development, optimizing the effectiveness of sponsorship engagements. To enhance data interpretation and analysis, the current account data utilization module integrates a data visualization tool. This tool provides graphical representations of current account data, making it easier for stakeholders to interpret complex financial information. By visualizing data trends and patterns, the tool enhances decision-making processes and facilitates deeper insights into sponsorship opportunities, driving more informed and effective strategies.

Financial Claims Module: The financial claims module asserts financial claims for sponsorship rights based on outcomes or determinants linked to interest rates. It enables stakeholders to seek reimbursement or compensation for their contributions to sponsorship programs, ensuring fair treatment and accountability. Within the financial claims module, an arbitration mechanism is incorporated to resolve disputes related to financial claims for sponsorship rights. This mechanism provides a structured process for resolving conflicts and disagreements among stakeholders. By offering a fair and impartial arbitration process, the system promotes transparency and fairness in sponsorship engagements, fostering positive relationships and mitigating potential conflicts.

Obtaining Goods or Services Module: This module facilitates the procurement of goods or services in kind from sponsors or partners affected by interest rates or deposits in current accounts. It enables stakeholders to benefit from sponsorship engagements beyond financial rewards, enhancing the value proposition for current account owners. The obtaining goods or services module includes a feedback loop to gather input from current account owners regarding the quality and relevance of obtained goods or services. This feedback mechanism enables stakeholders to assess and improve the effectiveness of sponsorship initiatives based on user experiences and preferences. By soliciting feedback, the system can continuously refine and optimize sponsorship engagements, ensuring alignment with the needs and expectations of current account owners.

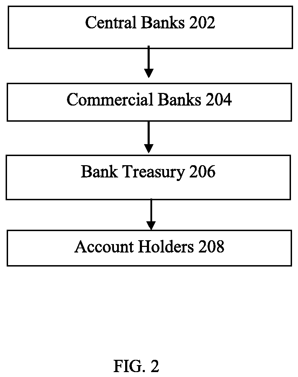

FIG. 2 is a block diagram that illustrates the interconnectedness among various entities of banking ecosystem, in accordance with a preferred embodiment of the invention. The diagram shows the association of central banks, commercial banks, bank treasuries, and account holders in the banking ecosystem. Each entity plays a specific role in the financial system, working together to facilitate banking operations, manage financial resources, and meet the diverse needs of customers.

Central Banks (202): Central banks serve as regulatory authorities overseeing the banking sector's operations. They play a pivotal role in maintaining financial stability by establishing and enforcing monetary policies, controlling interest rates, and setting reserve requirements. Through these mechanisms, central banks ensure the smooth functioning of the financial system and mitigate systemic risks. Additionally, central banks regulate commercial banks by issuing licenses, monitoring compliance with regulatory standards, and providing oversight to safeguard depositor interests and maintain market integrity.

Commercial Banks (204): Commercial banks are key players in the financial system, offering a wide range of banking services and account options to customers. These services include deposit-taking, lending, investment, and payment processing. Commercial banks provide various types of accounts, such as current, savings, and call accounts, tailored to meet the diverse financial needs of individuals and businesses. They operate under the regulatory framework established by central banks, ensuring adherence to prudential regulations, risk management standards, and consumer protection guidelines.

Bank Treasury (206): The bank treasury serves as the financial nerve center of the institution, responsible for managing its financial resources and operations. It oversees a wide range of financial activities, including handling deposits and loans, investing in securities, managing liquidity, and assessing and mitigating financial risks. The bank treasury plays a crucial role in optimizing the institution's balance sheet, ensuring sufficient liquidity to meet obligations, and maximizing returns on investments while managing risks prudently.

Account Holders (208): Account holders are individuals or entities who maintain accounts with commercial banks to manage their financial affairs. They utilize various types of accounts offered by banks, such as current, savings, and call accounts, to deposit funds, make transactions, and earn returns on their deposits. Account holders may also engage in sponsorships or other income-generating activities facilitated by the bank, allowing them to earn additional income from their assets. Overall, account holders play a vital role in the banking ecosystem, providing deposits that banks utilize to fund their operations and generate returns.

The invention encompasses a comprehensive system and methodology aimed at optimizing sponsorship engagements through the strategic utilization of liquid assets, particularly cash, held within bank accounts. By leveraging innovative approaches and data analytics, the invention seeks to enhance the effectiveness and efficiency of sponsorship opportunities for organizations, entities, and individuals.

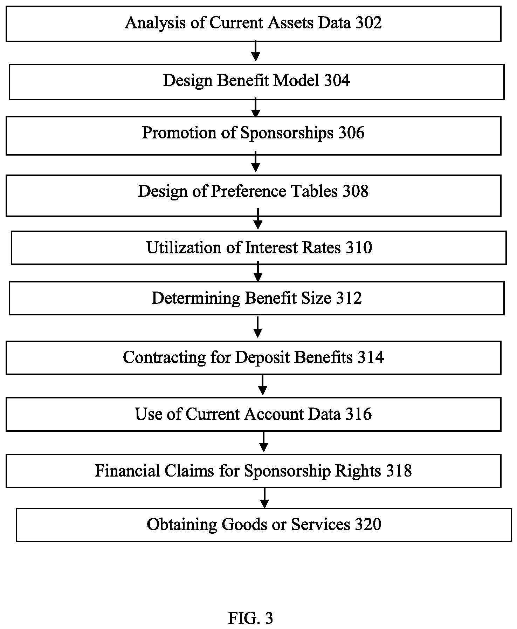

FIG. 3 is a flowchart that provide detailed explanations of various components and processes outlined, in accordance with a preferred embodiment of the invention. This flowchart outlines the sequential steps involved in the invention process, starting from the analysis of current assets data to obtaining goods or services from sponsors or partners. Each step represents a specific task or action within the process, guiding stakeholders through the various stages of optimizing sponsorship engagements through the strategic utilization of liquid assets.

Analysis of Current Assets Data (Code 302): The analysis of current assets data involves a meticulous review of financial information pertaining to current accounts, including account balances, transaction history, and liquidity levels. This examination serves the purpose of identifying and evaluating potential sponsorship or business partnership opportunities. By analyzing the current assets data, stakeholders can assess the suitability and feasibility of sponsorship engagements based on factors such as stability, cash flow patterns, and investment strategies.

Designing Benefit Model (Code 304): A critical aspect of the invention is the design of a benefit model that outlines the tangible or intangible benefits current account owners will receive from participating in sponsorship or commercial partnership opportunities. These benefits may include cash rewards, discounts, exclusive offers, or promotional opportunities. The benefit model serves to clearly define the value proposition for current account owners and incentivize their participation in sponsorship programs.

Promotion of Sponsorships (Code 306): Effective promotion of sponsorships is essential for driving awareness and participation among current account owners. This involves developing and executing marketing campaigns, creating promotional materials, and utilizing various channels to communicate the benefits and opportunities associated with sponsorship engagements. By promoting sponsorships effectively, stakeholders can maximize engagement and participation in sponsorship programs.

Design of Preference Tables (Code 308): Preference tables play a crucial role in facilitating negotiations and establishing fair compensation ratios for utilizing liquid assets and current accounts in sponsorship agreements. These tables outline the terms and conditions of sponsorship or partnership agreements, taking into account factors such as interest rates, account balances, and expected returns. Preference tables ensure transparency and equity in negotiations between parties involved in sponsorship engagements.

Utilization of Interest Rates (Code 310): Interest rates and their derivatives are key determinants in assessing the size and scope of sponsorships and commercial partnerships. Higher interest rates may indicate greater potential returns on sponsorship investments, while lower rates may impact the feasibility of sponsorship opportunities. Interest rates serve as critical factors in evaluating the financial viability and attractiveness of sponsorship programs.

Determining Benefit Size (Code 312): Determining the size and magnitude of benefits associated with sponsorship or business partnerships involves quantitative analysis using interest rates, deposits, and time variables. This analysis helps stakeholders calculate potential returns and assess the value proposition for current account owners. By accurately determining benefit sizes, stakeholders can optimize sponsorship engagements and enhance the overall effectiveness of partnership initiatives.

Contracting for Deposit Benefits (Code 314): Contracting for deposit benefits involves formalizing agreements to leverage current deposits for calculating the value of sponsorships, commercial partnerships, or remuneration. These contracts outline the terms and conditions governing the utilization of liquid assets for sponsorship purposes, ensuring clarity and transparency in the agreement between parties involved.

Use of Current Account Data (Code 316): The utilization of current account data involves leveraging financial information for activities related to sponsorship or business partnerships. This may include conducting market research, analyzing customer demographics, and evaluating the financial feasibility of sponsorship opportunities. Current account data serves as valuable insights for decision-making and strategy development in sponsorship and partnership initiatives.

Financial Claims for Sponsorship Rights (Code 318): Financial claims for sponsorship rights entail asserting claims for compensation or remuneration based on the financial benefits derived from sponsorship programs. These claims may include seeking reimbursement for investment costs, claiming a share of sponsorship revenues, or negotiating compensation based on financial performance metrics outlined in the sponsorship agreement.

Obtaining Goods or Services (Code 320): Obtaining goods or services in kind from sponsors or business partners involves receiving products, services, or other benefits as part of a sponsorship or partnership agreement. These goods or services may be directly or indirectly influenced by interest rates or deposits in current accounts, enhancing the overall value proposition for current account owners and stakeholders involved in sponsorship engagements.

The system and methodology outlined herein represent a pioneering approach to optimizing sponsorship engagements through the strategic utilization of liquid assets within bank accounts. By transcending traditional banking practices and introducing innovative revenue-generating mechanisms, this methodology offers financial institutions the opportunity to enhance customer relationships, maximize revenue generation, and diversify income streams, ultimately driving long-term growth and success. Some of the advantages are mentioned below:
Maximized Revenue Generation: The methodology empowers banks and financial institutions to maximize revenue generation by leveraging the substantial liquid assets held in current accounts. By channeling these assets into sponsorship engagements, institutions can unlock new avenues for income generation beyond traditional banking practices.

Enhanced Customer Engagement: Account holders are incentivized to engage more actively with their financial institutions through participation in commercial sponsorships. This fosters deeper and more meaningful relationships between institutions and their customers, leading to increased loyalty and satisfaction.

Diversification of Income Streams: By utilizing liquid assets for sponsorship engagements, account owners have the opportunity to diversify their income streams beyond conventional interest payments. This offers greater financial stability and resilience by reducing reliance on a single source of income.

Strategic Resource Allocation: The invention facilitates strategic resource allocation by enabling banks and financial institutions to allocate liquid assets towards sponsorship engagements that align with their overarching business objectives. This ensures that resources are deployed in a manner that maximizes their impact and contributes to the institution's strategic goals.

Competitive Advantage: Implementing this methodology provides banks and financial institutions with a competitive edge in the market. By offering innovative opportunities for account holders to participate in sponsorship activities and share in the associated income, institutions can differentiate themselves from competitors and attract new customers while retaining existing ones.

Value-added Services: The methodology introduces value-added services for account holders, enhancing their overall banking experience. By involving them in sponsorship opportunities and providing them with additional income streams, financial institutions demonstrate a commitment to their customers' financial well-being and offer tangible benefits beyond traditional banking services.

Mitigation of Risk: Diversifying income streams through sponsorship engagements helps mitigate the risk associated with fluctuations in interest rates or market conditions. By spreading revenue sources across different channels, financial institutions can enhance their resilience to economic uncertainties and ensure a more stable financial performance over time.

While the subject invention is described and illustrated with respect to certain preferred and alternative embodiments, it should be understood that various modifications can be made to those embodiments without departing from the subject invention, the scope of which is defined in the following claims.

## Claims

1. A system for optimizing sponsorship engagements comprising:
a data analysis module configured to analyze current assets data to identify sponsorship or business partnership opportunities, or grants;
a benefit modeling module configured to design a benefit model providing tangible or intangible benefits for current account owners participating in sponsorship or commercial partnership engagements or grants;
a promotion module configured to promote sponsorship opportunities and benefits associated with utilizing liquid assets;
a preference table design module configured to design preference tables for negotiating compensation ratios based on interest rates, account balances, and expected returns;
an interest rate utilization module configured to utilize interest rates and their derivatives in determining the size and scope of sponsorships and commercial partnerships or grants;
a benefit size determination module configured to calculate the size of benefits associated with sponsorship or business partnerships using interest rates, deposits, and time variables;
a contracting module configured to contract for deposit benefits by formalizing agreements for leveraging current deposits in sponsorship engagements or commercial partnerships or grants;
a current account data utilization module configured to utilize financial information from current accounts for activities related to sponsorship or business partnerships or grants;
a financial claims module configured to assert financial claims for sponsorship rights based on outcomes or determinants linked to interest rates;
an obtaining goods or services module configured to obtain goods or services in kind from sponsors or partners affected by interest rates or deposits in current accounts.

2. The system of claim 1, wherein the data analysis module further comprises, a predictive analytics component configured to forecast future trends in sponsorship opportunities based on historical data analysis.

3. The system of claim 1, wherein the benefit modeling module further comprises a customization feature allowing current account owners to tailor benefits according to their preferences and interests.

4. The system of claim 1, wherein the promotion module further comprises an automated marketing platform integrating with social media channels to reach a wider audience of current account owners.

5. The system of claim 1, wherein the preference table design module further comprises a dynamic adjustment mechanism capable of updating compensation ratios in real-time based on market fluctuations and regulatory changes.

6. The system of claim 1, wherein the interest rate utilization module further comprises a scenario analysis tool allowing stakeholders to simulate the impact of different interest rate scenarios on sponsorship, commercial partnerships, or grants outcomes.

7. The system of claim 1, wherein the benefit size determination module further comprises a sensitivity analysis function to assess the sensitivity of benefit sizes to changes in interest rates, deposits, and time variables.

8. The system of claim 1, wherein the contracting module further comprises a compliance verification feature ensuring adherence to legal and regulatory requirements in sponsorship, commercial partnership, or grants agreements.

9. The system of claim 1, wherein the current account data utilization module further comprises a data visualization tool providing graphical representations of current account data for easier interpretation and analysis.

10. The system of claim 1, wherein the financial claims module further comprises an arbitration mechanism for resolving disputes related to financial claims for sponsorship rights, commercialpartnerships, or grants.

11. The system of claim 1, wherein the obtaining goods or services module further comprises a feedback loop for soliciting feedback from current account owners on the quality and relevance of obtained goods or services.

12. A method for optimizing sponsorship engagements comprising:
analyzing current assets data to identify sponsorship or business partnership opportunities or grants;
designing a benefit model providing tangible or intangible benefits for current account owners participating in sponsorship or commercial partnership or grants engagements;
promoting sponsorship opportunities and benefits associated with utilizing liquid assets;
designing preference tables for negotiating compensation ratios based on interest rates, account balances, and expected returns;
utilizing interest rates and their derivatives in determining the size and scope of sponsorships and commercial partnerships and grants;
calculating the size of benefits associated with sponsorship or business partnerships using interest rates, deposits, and time variables;
contracting for deposit benefits by formalizing agreements for leveraging current deposits in sponsorship engagements, commercialpartnership, or grants;
utilizing financial information from current accounts for activities related to the sponsorship or business partnerships;
asserting financial claims for the sponsorship rights based on outcomes or determinants linked to interest rates; and
obtaining goods or services in kind from sponsors or partners affected by interest rates or deposits in current accounts.
